# EUROPEAN PATENT APPLICATION

(11) **EP 2 148 174 A2**
(43) Date of publication of application: **27.01.2010**
(21) Application number: 09163505.2
(22) Date of filing: 23.06.2009
(51) Int. Cl.: G01C 21/34

(54) **Navigation apparatus and method**

(30) Priority: 22.07.2008 KR 20080071215
(71) Applicant: Samsung Electronics Co., Ltd., Suwon-si Gyeonggi-do (KR)
(72) Inventor: Jung, Min-chul, Gyeonggi-do (KR); Park, Jeong-hun, Gyeonggi-do (KR)
(74) Representative: Walaski, Jan Filip

(57) **Abstract**

A navigation apparatus and method of using the same, to guide a user along a route from a current position to a destination. The method includes: determining whether a turn occurs within a first distance from the current position; determining whether a predetermined situation occurs after the turn, when the turn occurs within the first distance; and displaying information about the predetermined situation before the making the turn, based on the determination result of the second determination unit.

## Description

Aspects of the present invention relate to a navigation apparatus and method of using the same.

Recently, since the speed limits of roads have not been increased accordingly with the increase in the driving speed of vehicles, traffic jams have become more common and severe. Thus, drivers use navigation systems in order to arrive at a destination without being stuck in traffic jams, or to travel on roads that the driver has never traveled on before.

Navigation systems are being developed to meet the convenience of users. For example, conventional navigation systems provide the users with basic functions, such as searching for routes from a current position to a destination, and route guidance. However, present navigation systems fail to notify the users about the positions of road junctions or positions of traffic cameras that occur in close proximity to other turns.

Aspects of the present invention provide a navigation apparatus and method, to guide a user along a route from a current position to a destination.

According to an aspect of the present invention, there is provided a navigation method to guide a user along a route from a current position to a destination, the method including: a first determination process to determine whether a turn occurs within a first distance from the current position of the moving object; a second determination process to determine whether a predetermined situation occurs after the turn, when the turn occurs within the first distance; and a control process to output information about the predetermined situation, before the user makes the turn, based on the result of the second determination process.

According to an aspect of the present invention, the second determination process may include determining whether the predetermined situation occurs within a second distance from the turn.

According to an aspect of the present invention, the predetermined situation may include a case where a second turn occurs within a second distance from a first turn.

According to an aspect of the present invention, in the control process, a distance from the turn to the predetermined situation may be output.

According to an aspect of the present invention, in the control process, a first map of the current position and a second map of a position further along the route may be displayed.

According to an aspect of the present invention, the control process may further include: a position determination process to determine the relative locations of the first and second maps, based on the direction of the turn.

According to an aspect of the present invention, in the position determination process, when the turn is a left turn, the second map may be displayed to the left of the first map, and when the turn is a right turn, the second map may be displayed to the right of the first map.

According to an aspect of the present invention, the control process may further output a third map showing a schematic view of the current position.

According to another aspect of the present invention, there is provided a navigation apparatus to guide a user along a route, from a current position to a destination, the apparatus including: a first determination unit to determine whether a turn occurs within a first distance from the current position ; a second determination unit to determine whether a predetermined situation occurs after the turn; and a control unit to control the display of information about the predetermined situation, before the turn, based on the determination of the second determination unit.

According to an aspect of the present invention, the second determination unit may further determine whether the predetermined situation occurs within a second distance from the turn.

According to an aspect of the present invention, the predetermined situation may include a case where a second turn occurs within the second distance from a first turn.

According to an aspect of the present invention, the control unit may further output the distance from the turn to the predetermined situation.

According to an aspect of the present invention, the apparatus may further include: a display unit to display at least one of a first map of the current position of the apparatus and a second map of a subsequent location on the route, such as a location after a turn in the route. The control unit may control the display unit, so as to display the second map, when the predetermined situation occurs within a second distance from the turn.

According to an aspect of the present invention, the control unit may further include: a position determination unit to determine a position where the second map will be displayed, based on the direction of the turn.

According to an aspect of the present invention, the position determination unit determines that the second map should be displayed to the left of the first map, when the turn is a left turn, and determines that the second map should be displayed to the right of the first map, when the turn is a right turn.

According to an aspect of the present invention, the control unit may further output third map showing a schematic view of a current position.

Additional aspects and/or advantages of the present invention will be set forth in part in the following description and, in part, will be obvious from the description, or may be learned by practice of the invention.

These and/or other aspects and advantages of the invention will become apparent and more readily appreciated from the following description of the exemplary embodiments, taken in conjunction with the accompanying drawings, of which:
FIG. 1 is a block diagram of a navigation apparatus, according to an exemplary embodiment of the present invention;
FIG. 2 shows map displayed by the navigation apparatus, according to an exemplary embodiment of the present invention;
FIGS. 3A through 3D show different display formats of map by the navigation apparatus, according to exemplary embodiments of the present invention;
FIG. 4 is a flowchart illustrating a navigation method, according to an exemplary embodiment of the present invention; and
FIG. 5 is a flowchart illustrating a navigation method, according to another exemplary embodiment of the present invention.

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

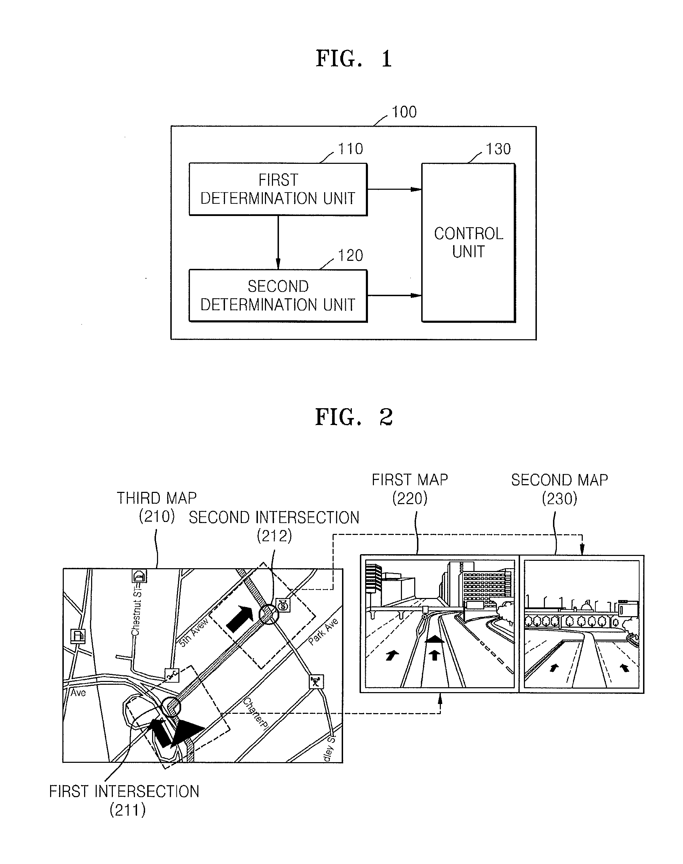

FIG. 1 is a block diagram of a navigation apparatus 100, according to an exemplary embodiment of the present invention. The navigation apparatus 100 includes a first determination unit 110, a second determination unit 120, and a control unit 130. The navigation apparatus 100 guides a user along a route between a current position and a destination. Herein the current position refers to the current location of the navigation apparatus 100 and/or the user.

The first determination unit 110 determines whether there is a turn within a first distance from the current position. Herein, a turn refers to any significant directional change or deviation in the route. For example, a turn can be where one road is divided into two or more roads, for example, an intersection, a bridge, an interchange, and a tunnel, and may also include locations where the route abruptly changes, such as a sharp curve or a detour.

When the first determination unit 120 determines that a turn occurs within the first distance, the second determination unit 120 determines whether there is a predetermined situation after the turn that the user should be notified of. The predetermined situations can be set by a user and may include situations where a user desires to be alerted before the user encounters the situation. For example, the situation can be where a second turn occurs in close proximity to a first turn. The situation may also relate to the occurrence of speed bumps, construction sites, or speed monitoring cameras. As described above, such situations may cause an accident, unless the user is prepared in advance.

In another exemplary embodiment, the second determination unit 120 may further determine whether the distance between a turn and a predetermined situation is within a second distance. If so, the control unit 130, as will be described later, may output information about the predetermined situation. If the predetermined situation is a long distance after the turn, the driver can effectively prepare for the situation, and thus, there may be no need to output information about the predetermined situation to the driver. The control unit 130 controls the navigation apparatus 100, such that the information about the predetermined situation is output before the user reaches the turn, based on the determination made by the second determination unit 120.

The navigation apparatus 100 may further include a display unit (not shown). A conventional navigation apparatus only displays a map of the current position thereof. When the navigation apparatus 100 includes the display unit, the control unit 130 may control the display unit to display a map of the current position and information about the predetermined situation.

For example, the control unit 130 controls the display unit to display a map showing a location on the route, which is after the turn. Hereinafter, the map of the current position of the user will be referred to as a first map, and the map of the subsequent location will be referred to as a second map. If the turn and the predetermined situation are in close proximity, the control unit 130 controls display unit, so that the first map and the second map are displayed simultaneously.

The first map can be displayed in a first region of the display unit, and the second map can be displayed in a second region of the display unit. The display unit can divided into any number of regions, for example, the display unit may be divided into two regions having the same size ration (1:1), or two regions having different size ratios (1:X).

When both of the first and second maps are displayed on the display unit, the relative locations of the maps may be changed, depending on the direction of the turn. For example, when the turn is a left turn, the second map may be displayed to the left of the first map, and when the turn is a right turn, the second map may be displayed to the right of the first map. Similarly, when the turn is a U-turn, the second map may be displayed below the first map, and when the turn relates to an overpass or a tunnel, the second map may be displayed above the first map.

The second map may include additional information. For example, the second map may include distance information from the turn to the position of the predetermined situation. In another embodiment, a third map displaying a schematic view of the current position may be displayed with the first and second maps.

In conventional navigation systems, a user is not informed about a situation after a turn, until the turn has been made. Thus, the user must enter the situation unawares, which increases the likelihood of an accident. However, according to aspects of the present invention, this problem can be solved. When the predetermined situation occurs a short distance after a turn, the information about the predetermined situation is displayed to the user, before the user makes the turn. Thus, the user can effectively prepare for the situation, which reduces the likelihood of an accident.

FIG. 2 shows maps displayed be the navigation apparatus 100, according to an exemplary embodiment of the present invention. In the example of FIG. 2, the navigation apparatus 100 is installed in a vehicle, and it is assumed that the turn is at an intersection.

In FIG. 2, a third map 210 displays a schematic view of the current position of the vehicle, a first map 220 displays a detailed view of the current position, and a second map 230 displays a detailed view of a location subsequent to the turn. In another exemplary embodiment, the first map 220 is displayed only when the vehicle is close to the turn, and at other times the third map 210 is displayed instead.

Referring to the third map 210, the mapped route passes through a first intersection 211 and a second intersection 212. First, it is assumed that the vehicle is approaching the first intersection 211. Therefore, the first map 220 represents the current position of the vehicle and includes the first intersection 211. Then, it is determined whether there is a predetermined situation on the route, after the first intersection 211..

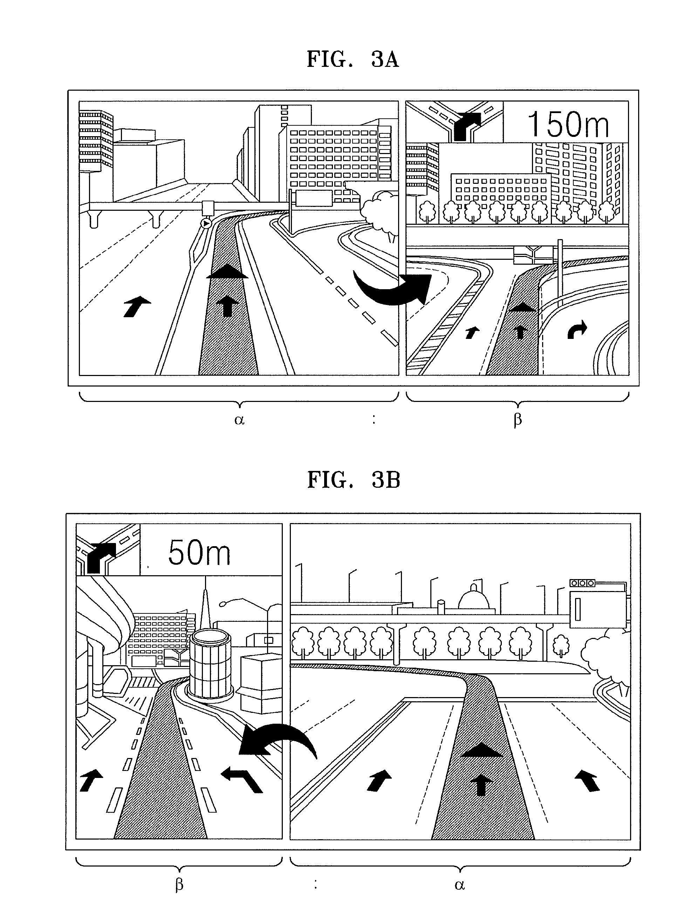

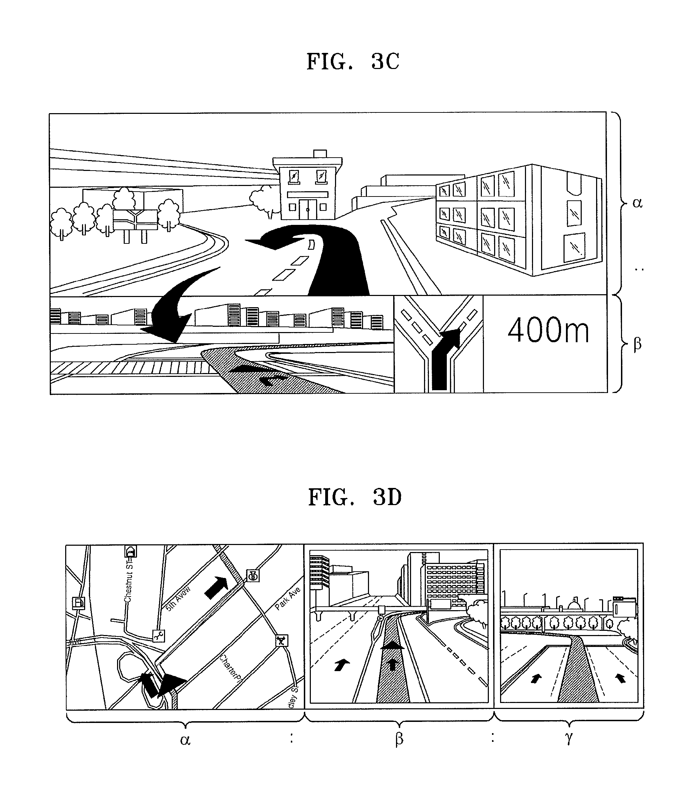

Since the second intersection 212 occurs after the first intersection 211, and a distance between the first intersection 211 and the second intersection 212 is very short, the second intersection 212 qualifies as a predetermined situation. Therefore, the second map 230 is displayed to the right of the first map 220, before the vehicle enters the first intersection 211. The arrangement of the first and second maps 220, 230 may vary, and a detailed description of the various arrangements is described below, with reference to FIG. 3. As described above, when the driver is notified of the close proximity of the second intersection 212 to the first intersection 211, the probability of accidents can be greatly reduced.

FIGS. 3A-3D show various arrangements of maps on the navigation apparatus 100, according to exemplary embodiments of the present invention. In FIGS. 3A through 3D, the navigation apparatus 100 is installed in a vehicle, and it is assumed that the turns are at intersections. In addition, the predetermined situation can be any situation that the driver should be alerted to in advance, such as the case where a subsequent turn occurs within a short distance from the turn.

Referring to FIG. 3A, it is determined that the vehicle will turn right at the turn, and the next turn is within a set distance from the first turn. The navigation apparatus 100 displays the first map 220 and the second map 230. The display unit is divided into regions having a predetermined size ratio (α:β), and the first and second maps 220, 230 are displayed in the respective regions. Since the turn is a right turn, the second map 230 is displayed to the right of the first map 210.

The second map 230 may include additional information for the driver. Referring to FIG. 3A, the distance from the first turn to the next turn and the information about the route through the next turn are displayed in the second map 230.

Referring to FIG. 3B, the first turn is a left turn, and the next turn is a right turn that occurs within a set distance from the first turn. Since the vehicle turns left at the first turn, the second map 230 is displayed to the left of the first map 220. The size ratio (α:β) is about 2:1.

Referring to FIG. 3C, the first turn is a U-turn, and the next turn occurs within a set distance from the first turn. Since the first turn is a U-turn, the second map 230 is displayed below the first map 220. The size ratio (α:β) is about 2:1.

Referring to FIG. 3D, the third map 210, showing schematic view of the current position, is displayed on the display unit, for the convenience of the driver. That is, display unit is divided into three parts to display the third map 210, the first map 220, and the second map 230. Since the vehicle will turn right at the turn, the second map 230 is displayed to the right of the first map 220. The size ratio (α:β:γ) is about 3:2:1.

As described above, the relative locations of the maps 210, 220, 230 are varied, depending on the direction of the turn. Thus, the driver can also identify the direction of the next turn, using only the relative positions of at least two of the maps 210, 220, 230.

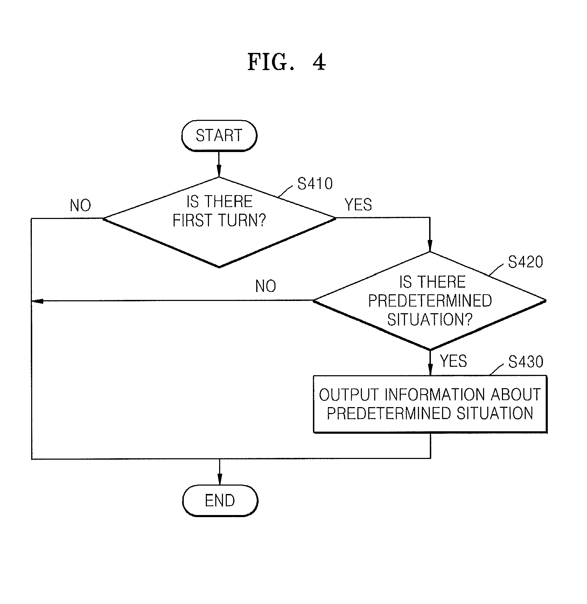

FIG. 4 is a flowchart illustrating a navigation method, according to an exemplary embodiment of the present invention. In operation S410, a determination is made as to whether a first turn occurs within a first distance from the current position of a user. If the first turn occurs within the first distance, the method proceeds to operation S420.

In operation S420, it is determined whether a predetermined situation occurs within a certain distance after the first turn. If the predetermined situation occurs, operation S430 is performed. The predetermined situation may include a case where a second turn occurs within a second distance from the first turn. The second distance may be set with or without regard to the speed of the user. That is, when the vehicle moves at a high speed, the second distance can be lengthened, in operation S430. Similarly, if the vehicle moves at a low speed, the second distance can be shortened.

In operation S430, information about the predetermined situation is output, before the first turn is made. For example, first and second maps can be displayed. Here, the arrangement of the second map with respect to the first map can be determined according to the direction of the first turn. When the first turn is to the right, the second map is displayed to the right of the first map, and when the first turn is to the left, the second map is displayed to the left of the first map. In addition, information about the distance between the first turn and the predetermined situation can be included in the second map.

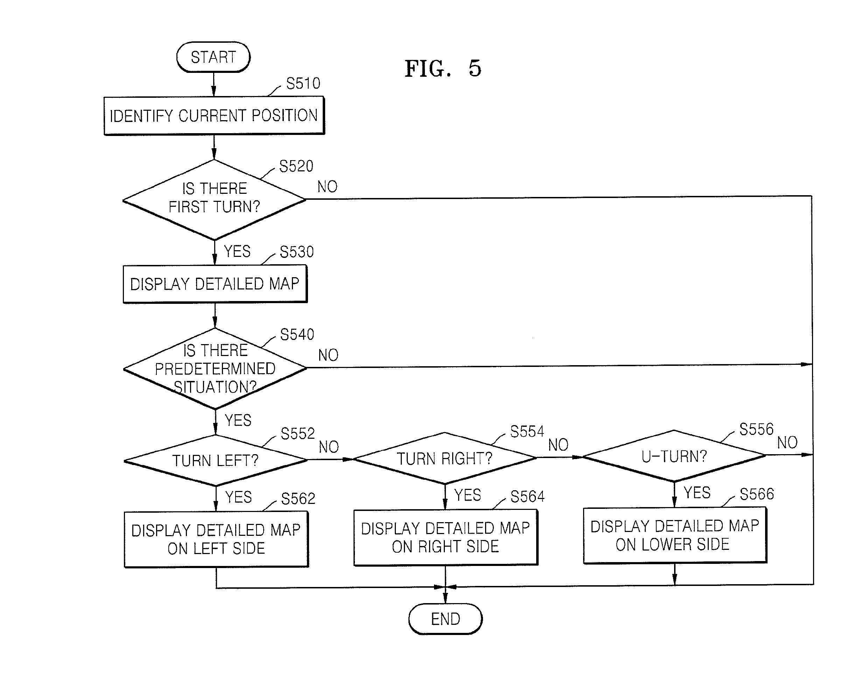

FIG. 5 is a flowchart illustrating a route guiding method, according to another exemplary embodiment of the present invention. In operation S510, the current position of the user/navigation apparatus is identified. The current position of the user can be identified using a global positioning system (GPS) installed in the navigation apparatus.

In operation S520, it is determined whether the user is close to a turn that occurs on the route. For example, when the distance between the current position and the turn is within a set distance, it can be determined that the user is approaching the turn. If the turn occurs within the distance, operation S530 is performed, to display a first map of the current position.

In operation S540, it is determined whether a predetermined situation occurs in close proximity to the turn. In this case operations S552 through S556 are performed.

In operations S552 through S556, the direction of the turn is determined. In more detail, in operation S552, if the turn is to the left, a second map of a position after the left turn is displayed on the left side of the screen. In operation S554, if the turn is to the right, the second map is displayed to the right of the first map. In operation S556, if the turn is a U-turn, the second map is displayed below the first map.

In operations S552 through S556, left turns, right turns, and U-turns have been described, however, the turn may include other route deviations, such as passing through a tunnel, detour, or overpass. In some embodiments, the orientation of the first and second maps is reversed. For example, when a U-turn is made after a first turn, the second map can be displayed above the first map. Similarly, when a tunnel is entered after the first turn, the second map can be displayed above the first map.

Aspects of the present invention can also be embodied as computer-readable codes on a computer-readable recording medium. Also, codes and code segments to accomplish the present invention can be easily construed by programmers skilled in the art to which the present invention pertains. The computer-readable recording medium is any data storage device that can store data which can be thereafter read by a computer system or computer code processing apparatus. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Aspects of the present invention may also be realized as a data signal embodied in a carrier wave and comprising a program readable by a computer and transmittable over the Internet.

Although a few exemplary embodiments of the present invention have been shown and described, it would be appreciated by those skilled in the art that changes may be made in these exemplary embodiments, without departing from the principles of the invention, the scope of which is defined in the claims.

## Claims

1. A navigation method to guide a user along a route from a current position to a destination, the method comprising:
performing a first determination process to determine whether a turn of the route occurs within a first distance from the current position;
performing a second determination process to determine whether a predetermined situation occurs after the turn, if the turn occurs within the first distance; and
performing a control process to output information about the predetermined situation before the turn is reached, based on the result of the second determination process.

2. The method of claim 1, wherein the performing of the second determination process comprises determining whether the predetermined situation occurs within a second distance from the turn.

3. The method of claim 2, wherein the predetermined situation comprises a next turn occurring within the second distance from the turn.

4. The method of claim 3, wherein the performing of the control process comprises displaying a first map of the current position of the user, and a second map showing a location on the route subsequent to the turn.

5. The method of claim 5, wherein the performing of the control process further comprises performing a position determination process to select what location will be displayed in the second map, based on the direction of the turn.

6. The method of claim 5, wherein the performing of the position determination process comprises:
displaying the second map to the left of the first map, when the turn is a left turn; and
displaying the second map to the right of the first map, when the turn is a right turn.

7. A navigation apparatus to guide a user along a route from a current position to a destination, the apparatus comprising:
a first determination unit to determine whether a turn occurs within a first distance from the current position;
a second determination unit to determine whether a predetermined situation occurs after the turn, if the turn occurs within the first distance; and
a control unit to output information about the predetermined situation, prior to the apparatus reaching the turn, based on the determination of the second determination unit.

8. The apparatus of claim 7, wherein the second determination unit determines whether the predetermined situation occurs within a second distance from the turn.

9. The apparatus of claim 8, wherein the predetermined situation comprises a case where a subsequent turn occurs within the second distance from the turn.

10. The apparatus of claim 9, further comprising:
a display unit to display at least one of a first map corresponding to the current position of the apparatus and second map corresponding to a position of the apparatus, after the apparatus passes the turn,
wherein the control unit controls the display unit, so as to display the second map when the predetermined situation occurs within a second distance from the turn.

11. The apparatus of claim 10, wherein the control unit further comprises a position determination unit to control the relative positions of the first and second maps on the display unit, based on the direction of the turn.

12. The apparatus of claim 11, wherein the position determination unit positions the second map to the left of the first map, when the turn is a left turn, and positions the second map to the right of the first map, when the turn is a right turn.

13. A computer readable recording medium having embodied thereon a computer program for executing the method of claim 1.

14. The method of claim 2, wherein the first and second distances vary according to the speed of the user.

15. The apparatus of claim 8, wherein the control unit changes the first and second distances, according to the speed of the apparatus.
